Europäisches Patentamt

European Patent Office

Office européen des brevets

(19)

(11) Veröffentlichungsnummer: **0 139 267**
**B1**

(12) # EUROPÄISCHE PATENTSCHRIFT

(45) Veröffentlichungstag der Patentschrift:
02.09.87

(51) Int. Cl.⁴: **G 21 C 7/10**

(21) Anmeldenummer: **84111885.4**

(22) Anmeldetag: **04.10.84**

(54) **Verfahren und Einrichtung zum Austausch von neutronenabsorberstäben.**

(30) Priorität: **15.10.83 DE 3337636**

(43) Veröffentlichungstag der Anmeldung:
**02.05.85 Patentblatt 85/18**

(45) Bekanntmachung des Hinweises auf die Patenterteilung:
**02.09.87 Patentblatt 87/36**

(84) Benannte Vertragsstaaten:
**BE CH DE FR IT LI**

(56) Entgegenhaltungen:
**FR-A-2 519 178**
**GB-A-2 077 483**
**GB-A-2 077 989**
**US-A-3 930 938**

(73) Patentinhaber: **BROWN BOVERI REAKTOR GmbH,
Dudenstrasse 44, D-6800 Mannheim 1 (DE)**

(72) Erfinder: **Bäro, Günter, Dr. Dipl.- Phys.,
Weinbergstrasse 32, D-6940 Weinheim (DE)**
Erfinder: **Kraus, Werner, Dipl.- Ing., T 6, 19, D-6800
Mannheim 1 (DE)**
Erfinder: **Stindt, Wilfried, Dipl.- Phys.,
Collinistrasse 18, D-6800 Mannheim 1 (DE)**

(74) Vertreter: **Kempe, Wolfgang, Dr., c/o BROWN,
BOVERI & CIE AG ZPT Postfach 351, D-6800
Mannheim 31 (DE)**

## Beschreibung

Die Erfindung betrifft ein Verfahren zum Avstausch von Neutronenabsorberstäben, die an ihrem Kopfende in je einer Bohrung eines Trägers gehalten und in Führungsrohren eines Kernreaktorbrennelements bewegbar sind.

In der Zeitschrift "Atomwirtschaft", März 83 wird auf Seite 153, linke Spalte unter Abschnitt 3.2 die Reparatur und die Handhabung von Neutronenabsorberelementen erwähnt. Über die Art und Weise der Handhabung wird dort jedoch nichts ausgesagt. In einem Druckwasserreaktor der 1300 MW Leistungsklasse werden nach jedem Brennelementwechsel ca. 50 Neutronenabsorberelemente bestehend aus Trägern mit jeweils 24 daran befestigten Neutronenabsorberstäben ausgebaut. Die Lagerung solcher Mengen an sperrigen Absorberelementen führt zu erheblichen Kapazitätsengpässen.

Es ist daher die Aufgabe der Erfindung ein Verfahren zum Zerlegen von Neutronenabsorberelementen (vgl. auch die GB-A-2 077 483) und zum Austausch von Neutronenabsorberstäben anzugeben.

Gelöst wird die Aufgabe erfindungsgemäß der durch, daß

a.) der Träger mit den Neutronenabsorberstäben in eine an einem Festpunkt des Lagers für Brennelemente arretierte Aufnahmevorrichtung eingebracht und festgelegt wird,

b.) die Verbindung zwischen dem Träger und wenigstens einem auszutauschenden Neutronenabsorberstab gelöst wird,

c.) der Träger mit den gegebenenfalls noch daran befestigten Neutronenabsorberstäben aus der Aufnahmevorrichtung entnommen wird,

d.) die gelösten, in Köchern der Aufnahmevorrichtung verbleibenden Neutronenabsorberstäbe werden zur Lagerung entnommen werden,

e.) neue Neutronenabsorberstäbe in die frei gewordenen Köcherpositionen eingesetzt werden, und

f.) der Träger mit den gegebenenfalls noch daran befestigten Neutronenabsorberstäben in der Aufnahmevorrichtung positioniert und mit den neuen Neutronenabsorberstäben verbunden wird.

Durch diese Maßnahmen ist eine Mehrfachverwendung des Trägers und eine Kompaktlagerung der unbrauchbaren Absorberstäbe möglich. Dies führt insgesamt gesehen zu einer Verringerung der Lagerkapazität.

Eine Einrichtung zur Durchführung des Verfahrens zeichnet sich dadurch aus, daß die Aufnahmevorrichtung eine Auflage zum Abstützen des Trägers und Durchführungen für jeden mit dem Träger verbundenen Neutronenabsorberstab aufweist, daß der Köcher unterhalb einer Durchführung angeordnet ist, daß jede Durchführung als Klemmelement für einen Neutronenabsorberstabausgebildet ist und daß Werkzeuge zum Lösen, Befestigen und Handhaben der Neutronenabsorberstäbe vorgesehen sind.

Eine weitere Ausgestaltung der Einrichtung zeichnet sich dadurch aus, daß die Durchführung an ihrer dam Köcher zugewandten Seite als abgesetzte Bohrung ausgebildet ist, daß von der Schulter der abgesetzten Bohrung bis zur Auflage für den Träger die Durchführung als kegelige Bohrung auseinanderläuft, daß der Köcher unter Zwischenschaltung eines Ringes in der abgesetzten Bohrung befestigt ist, daß der Ring ein Tellerfederpaket trägt, das unter Zwischenlage einer ringförmigen Scheibe an der Schulter zum Anliegen kommt und daß von dem Träger belastbare kegelförmig ausgebildete Klemmstücke entlang der kegeligen Bohrung bewegbar sind.

Gemäß einer vorteilhaften Weiterbildung der Einrichtung wird vorgesehen, daß dem Träger ein gegenüber der Aufnahmevorrichtung festlegbarer Klemmkörper zugeordnet ist, der ein Kupplungsstück des Trägers beaufschlagt und mit Durchgangsbohrungen für die Werkzeuge versehen ist.

Damit wird ein zuverlässiges Arretieren des Trägers auch dann erzielt, wenn das Gewicht des Trägers nicht zum Niederhalten der kegeligen Klemmstücke und damit zum Klemmen der Neutronenabsorberstäbe ausreicht.

Nach einer anderen Ausführung der Einrichtung sind die Durchführungen als Langlöcher ausgebildet, die in übereinander angeordneten und in Längserstreckung der Langlöcher relativ zueinander bewegbaren Flatten eingebracht sind.

Bei dieser Ausführung entfällt eine zusätzliche Verriegelungsvorrichtung für den Träger, da er nach seinem Aufsetzen in der Aufnahmevorrichtung durch Klemmen der Neutronabsorberstäbe im Bereich der Langlöcher sicher gehalten wird.

Die Platten sind vorzugsweise in einem Rahmen geführt wobei zu ihrer Relativbewegung ein Drehantrieb vorgesehen ist.

Gemäß einer bevorzugten Ausgestaltung der Einrichtung ist die Aufnahmevorrichtung auf dem Brennelementbehälter einer im Lagerbecken für Brennelemente angeordneten Brennelementreparaturstation abgestützt.

Dadurch ist kein zuzätliches Stützelement im Lagerbeckenerforderlich.

Vorzugsweise ist am Boden des Köchers eine in den Innenraum desselben ragende Druckfeder angeordnet.

Dadurch wird nach dem Lösen der Absorberstabklemmung und nach dem Entfernen des Trägers der Absorberstab soweit angehoben, daß er mit seinem vom Träger gelösten Ende von einem Werkzeug greifbar ist.

Anhand von Ausführungsbeispielen und der schematischen Zeichnungen Fig. 1 bis Fig. 5 wird das Verfahren und die Einrichtung zur

Durchführung des Verfahrens beschrieben.

Dabei zeigt die

Fig. 1 ein Absorberelement,

Fig. 2 eine Ausbildung einer Einrichtung in Pfeilrichtung II der Fig. 3 betrachtet als Halbschnitt,

Fig. 3 eine Ansicht der Fig. 2 in Pfeilrichtung III

Fig. 4 eine andere Ausbildung der Einrichtung in Vorderansicht als Teilschnitt und die

Fig. 5 eine Ansicht der Fig. 4 in Pfeilrichtung V.

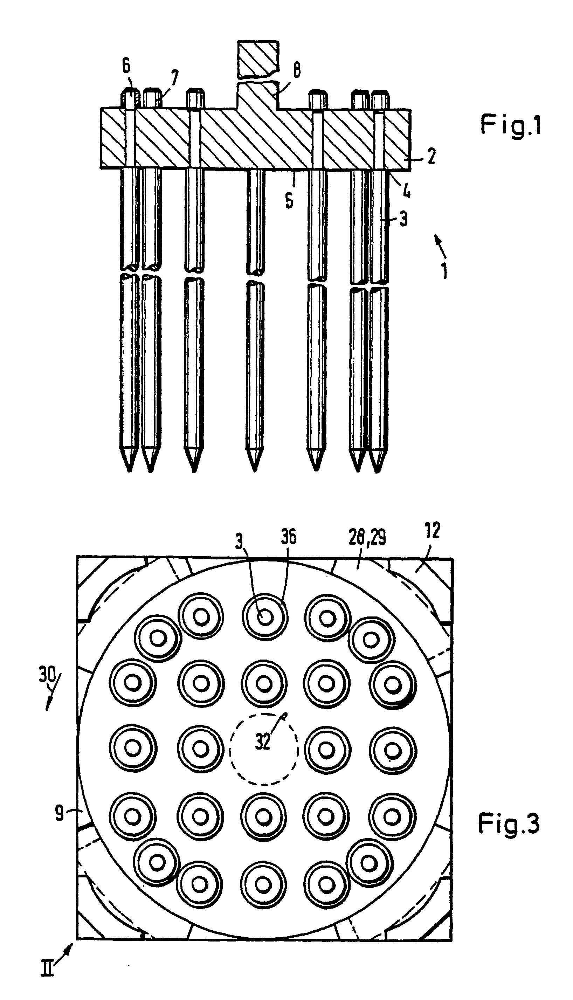

Die Fig. 1 zeigt ein Absorberelement 1 eines Druckwasserreaktors. Es besteht aus einem Träger 2, der von einer Vielzahl von Neutronenabsorberstäben 3 durchsetzt ist. Jeder Stab liegt mit einer Schulter 4 an der Unterseite 5 des Trägers an und weist an seinem den Träger 2 durchsetzenden Ende ein Gewinde 6 auf. Mit einer dieses Gewinde übergreifenden Mutter 7 wird ein Absorberstab 3 mit dem Träger verspannt. Die Mutter 7 ist gegen selbsttätiges Aufdrehen gesichert. Vom Zentrum des Trägers 2 kragt ein Kupplungsstück 8 nach der den Neutronenabsorberstäben abgewandten Trägerseite hin aus. Es dient zum Verbinden mit einem nicht dargestellten Antrieb, um eine Vertikalbewegung der Absorberstäbe 2 innerhalb von Führungsrohren eines Brennelements zu ermöglichen.

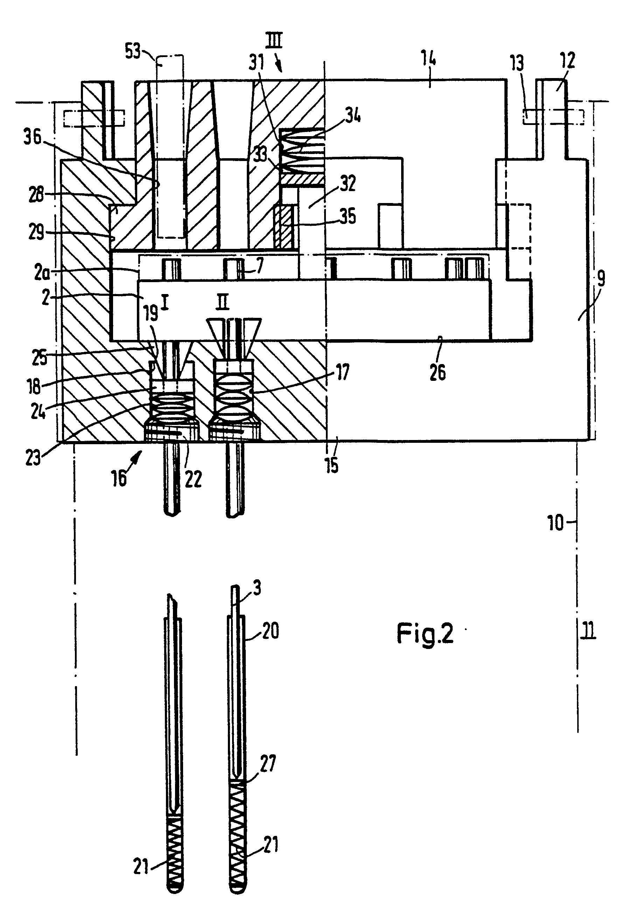

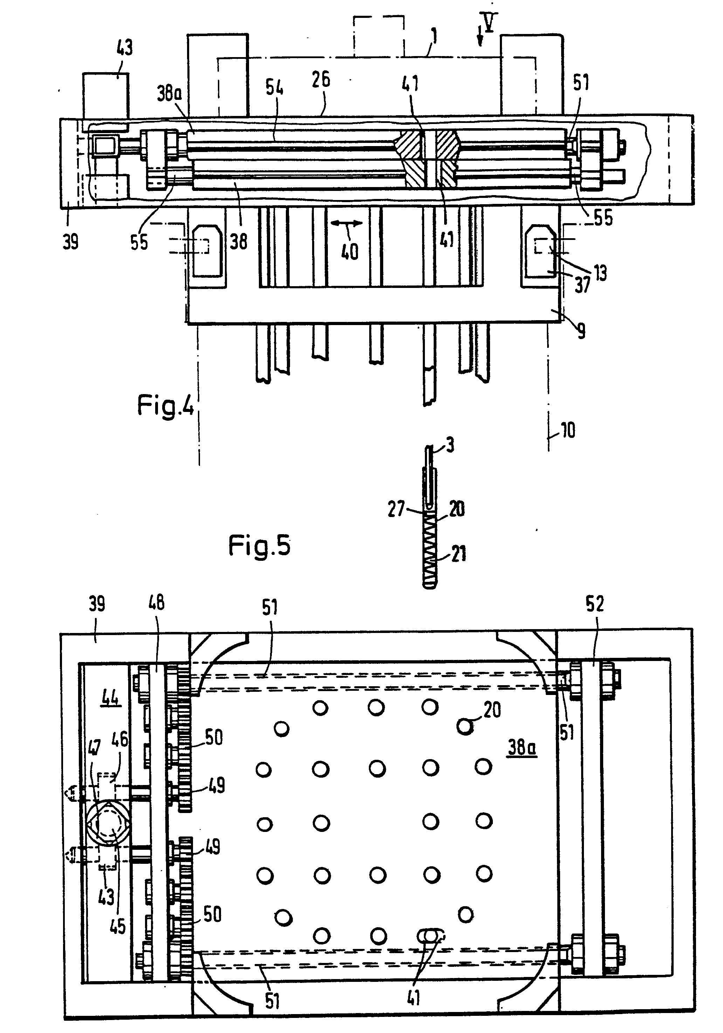

Zum Austausch von Absorberstäben 2 ist gem. Fig. 2 und 3 eine Aufnahmevorrichtung 9 vorgesehen, welche die äußeren Abmessungen eines üblicherweise in Kernkraftwerken eingesetzten Brennelementkopfstückes besitzt. Die Aufnahmevorrichtung läßt sich dadurch in einem üblicherweise für die Aufnahme von kompletten Brennelementen vorgesehenen Behälter 10 einer im Wasser 11 eines Brennelementlagerbeckens angeordneten nicht weiter dargestellten Brennelementreperaturstation einsetzen und verriegeln. Der Behälter ist strichpunktiert gezeichnet angedeutet. Seine Verriegelung erfolgt über eine am Pfosten 12 der Aufnahmevorrichtung angreifenden Klinke 13. Bei abgenommenem Klemmkörper 14 wird das Absorberelement 1 in die Aufnahmevorrichtung 9 eingebracht. Dazu ist eine Basisplatte 15 dieser Aufnahmevorrichtung mit der gleichen Anzahl von Durchführungen 16 versehen wie das Absorberelement 1 Absorberstäbe 3 aufweist. Die Durchführungen sind in der gleichen Geometrie angeordnet wie die Absorberstäbe. Jede Durchführung 16 ist als Klemmelement ausgebildet um den Absorberstab 3 beim Lösen oder Anziehen der Mutter 7 gegen Verdrehen zu sichern. Die Durchführung 16 ist dazu an ihrer dem Träger abgewandten Seite als abgesetzte Bohrung 17 ausgebildet. Von der Schulter 18 dieser Bohrung zu der dem Träger zugewandten Seite der Durchführung 16 verläuft eine kegelige Bohrung 19, die ihren größeren Durchmesser an der dem Träger 2 zugewandten Seite hat. Jede Durchführung ist an ihrer dem Träger abgewandten Seite als Köcher 20 ausgebildet, der zum Halten der Absorberstäbe 3 bei entfernter Mutter 7 dient. Der Köcher ist unter Zwischenschaltung eines Ringes 22 in der Abgesetzten Bohrung 17 befestigt. Dieser Ring trägt ein Tellerfederpaket 23, das eine ringförmige Scheibe 24 an der Schulter 18 der abgesetzten Bohrung 17 zur Anlage bringen kann. Die ringförmige Scheibe 24 kontaktet mit ihrer dem Tellerfederpaket 23 abgewandten Seitenfläche kegelförmig ausgebildete Klemmstücke 25, die entlang der kegeligen Bohrung 19 bewegbar sind. In der Fig. 2 sind aus Gründen der besseren Übersicht lediglich zwei Durchführungen 16 dargestellt. Die unter "I" dargestellte Durchführung zeigt ihre Stellung bei auf der Auflage 26 aufgesetztem Träger 2 und die unter "II" dargestellte Durchführung zeigt ihre Stellung bei entferntem Klemmkörper 14 mit dem durch die Kraft der Tellerfederpakete 23 in die strichpunktiert angegebene Fosition 2a gelangten Träger 2. In der Stellung "I" umfassen die Klemmstücke 25 wie eine Spannzange wirkend, den Absorberstab 3 und sichern ihn gegen Verdrehen beim Lösen oder Anziehen der Mutter 7. Eine im unteren Bereich des Köchers 20 befindliche Druckfeder 21 wirkt als Ausstoßelement für einen Absorberstab. Diese Druckfeder 21 wird dabei am Boden des Köchers 20 unter Verwendung einer zwischen Absorberstab 3 und Druckfeder 21 angeordneten Scheibe 27 unter einer Vorspannung gehalten. Wird der Klemmkörper 14 entfernt, so gelangt die Durchführung 16 in die Stellung "II" und der Träger 2 in die strichpunktiert angegebene Position 2a. Die vorgespannte Druckfeder 21 entspannt sich und stößt dadurch den Absorberstab 3 soweit nach oben, daß er nach dem Entfernen des Trägers 2 von einem in strichpunktiert gezeichneten Linien angedeuteten Werkzeug 53 erfaßt werden kann. Wie aus den Fig. 2 und 3 zu ersehen ist, ist der Klemmkörper 14 umfangsseitig mit vier Vorsprüngen 28 versehen, die nach Art eines Bajonettverschlusses in entsprechende Aussparungen 29 der Aufnahmevorrichtung 9 eingreifen. Dargestellt ist der Klemmkörper 14 in Wirkstellung. Durch Drehung um 45° in Pfeilrichtung 30 (Fig. 3) ist die Klemmung gelöst und der Klemmkörper 14 durch Anheben in vertikaler Richtung zu entfernen. Zum Abwärtsbewegen des Trägers 2 bis zu seinem Kontakt mit der Auflage 26 beaufschlagt der Klemmkörper 14 dessen Kupplungsstück 8, das in eine Ausnehmung 31 des Klemmkörpers ragt. Zwischen einer Stirnfläche 33 einer Scheibe 32 und dem Klemmkörper 14 ist ein Tellerfederpaket 34 angeordnet, das die Federkraft aller Tellerfederpakete 23 der Durchführungen 16 und aller Druckfedern 21 der Köcher 20 kompensiert. Ein an der Öffnung der Ausnehmung 31 angeordneter Anschlag 35 verhindert ein Herausfallen der Scheibe 32 bei der Entfernung des Klemmkörpers 14. Der Klemmkörper weist die gleiche Anzahl Durchgangsbohrungen 36 auf wie die Aufnahmevorrichtung 9 Durchführungen 16 besitzt. Bei in Wirkstellung befindlichem Klemmkörper 14 sind die Durchgangsbohrungen 36 derart oberhalb der Absorberstäbe 3 angeordnet, daß ein in strichpunktierten Linien angedeutetes Werkzeug 53 zum Lösen oder Befestigen der Mutter 7 eingebracht werden kann. Zum leichteren Einführen des Werkzeuges sind die Durchgangsbohrungen 36 des Klemmkörpers 14 trichterförmig erweitert.

Die Fig. 4 und 5 zeigen eine andere Ausbildung der Aufnahmevorrichtung hinsichtlich der Arretierung der Absorberstäbe 3. Die Aufnahmevorrichtung ist im gleichen Behälter 10 abgestützt wie zu Fig. 2 und 3 erläutert. über Klinken 13, die in Aussparungen 37 der Aufnahmevorrichtung 9 eingreifen, ist diesselbe mit dem Behälter 10 verriegelt. Sie besteht aus einem Rahmen 39, der nach oben und unten in der Kontur eines üblichen Brennelementkopfstückes fortgeführt ist um mit einem vorhandenen Brennelementgreifer transportiert und in dem vorgenannten Behälter 10 abgestützt werden zu können. In dem Rahmen 39 sind zwei übereinander angeordnete Platten 38, 38a geführt, die relativ zueinander in Pfeilrichtung 40 bewegbar sind. Beide Platten 38, 38a sind mit zueinander fluchtenden Langlöchern 41 versehen, die sich in Pfeilrichtung 40 erstrecken. An der Unterseite 42 des Rahmens 39 sind die Köcher 20 derart befestigt, daß sie die Absorberstäbe 3 des strichpunktiert angedeuteten Absorberelements 1 bei fluchtenden Langlöchern 41 aufnehmen. Die am Boden jedes Köchers 20 angeordneten Druckfedern 21 sind dabei so ausgelegt, daß sie beim Aufsetzen des Trägers 2 auf der oberen Platte 38a in ihre Vorspannstellung gelangt sind. Über einen fernbedienbaren Drehantrieb 43, dessen Drehbewegung in eine Linienbewegung in Pfeilrichtung 40 umgesetzt wird, wird die obere Platte 38a relativ zur Platte 38 bewegt. Dies führt zu einer Klemmung der Absorberstäbe, wie aus dem Ausschnitt der Fig. 4 an einem Absorberstab zu erkennen ist. Das Lösen oder Anziehen der Mutter 7 erfolgt nun ohne Verdrehen eines Absorberstabes. Nach dem Zurückfahren der Platte 38a in ihre Ausgangsstellung mit fluchtenden Langlöchern 41 und nach der Entfernung des Trägers mit den noch daran befestigten Absorberstäben entspannen sich die Druckfedern 21 und schieben die gelösten Absorberstäbe 3 soweit über die Auflage 26 der oberen Platte 38a hinaus, daß dieselben von einem nicht dargestellten Werkzeug gegriffen und aus dem Köcher 20 entnommen werden können.

Der Drehantrieb 43 zur Plattenbewegung besteht aus einer von einer Traverse 44 gehaltenen Schnecke 45, welche zwei Schneckenwellen 46, 47 in Drehung versetzt. Die Schneckenwellen sind im Rahmen 39 und in einer Traverse 48 abgestützt und tragen an ihren freien Enden je ein Zahnrad 49. Jedes Zahnrad 49 treibt über Zwischenräder 50 eine Kugelumlaufspindel 51, die der oberen Platte 38a an gegenüberliegenden Außenbereichen zugeordnet und in den Traversen 48 und 52 gelagert ist. Jeder Kugelumlaufspindel 51 ist eine nicht dargestellte Spindelmutter zugeordnet, die mit der Platte 38a verbunden ist. Während die untere Platte 38 über die Bolzen 55 starr mit den Traversen 48, 52 verbunden ist, wird über die Kugelumlaufspindeln die obere Platte 38a relativ zur unteren Platte 38 verschoben was zur Klemmung der Absorberstäbe 3 führt. Nuten 54 dienen zur Führung der Platten 38, 38a gegenüber dem Rahmen 39. In der Fig. 5 ist aus Gründen der besseren Übersicht nur einmal ein Langloch 41 dargestellt, während an den restlichen Positionen nur die Köcher 20 zu erkennen sind.

## Bezugszeichenliste

1 Absorberelement
2, 2a Träger
3 Neutronenabsorberstäbe
4, 18 Schulter
5, 42 Unterseite
6 Gewinde
7 Mutter
8 Kupplungsstück
9 Aufnahmevorrichtung
10 Behälter
11 Wasser
12 Pfosten
13 Klinke
14 Klemmkörper
15 Basisplatte
16 Durchführung
17 abgesetzte Bohrung
19 kegelige Bohrung
20 Köcher
21 Druckfeder
22 Ring
23, 24 Tellerfederpaket
24 ringförmige Scheibe
25 Klemmstück
26 Auflage
27, 32 Scheibe
28 Vorsprünge
29, 37 Aussparung
30, 40 Pfeilrichtung
31 Ausnehmung
33 Stirnfläche
35 Anschlag
36 Durchgangsbohrung
38, 38a Platten
39 Rahmen
41 Langloch
43 Drehantrieb
44, 48, 52 Traverse
45 Schnecke
46, 47 Schneckenwellen
49 Zahnrad
50 Zwischenrad
51 Kugelumlaufspindel
53 Werkzeug
54 Nute
55 Bolzen

**Patentansprüche**

1. Verfahren zum Austausch von Neutronenabsorberstäben, die an ihrem Kopfende in je einer Bohrung eines Trägers gehalten und in Führungsrohren eines Kernreaktorbrennelements bewegbar sind, bei dem

a.) der Träger (2) mit den Neutronenabsorberstäben (3) in eine an einem Festpunkt des Lagers für Brennelemente arretierte Aufnahmevorrichtung (9) eingebracht und festgelegt wird,

b.) die Verbindung zwischen dem Träger (2) und wenigstens einem auszutauschenden Neutronenabsorberstab (3) gelöst wird,

c.) der Träger (2) mit den gegebenenfalls noch daran befestigten Neutronenabsorberstäben (3) aus der Aufnahmevorrichtung (9) entnommen wird,

d.) die gelösten, in Köchern (20) der Aufnahmevorrichtung verbleibenden Neutronenabsorberstäbe zur Lagerung entnommen werden,

e.) neue Neutronenabsorberstäbe in die frei gewördenen Köcherpositionen eingesetzt werden,

f.) und der Träger (2) mit den gegebenenfalls noch daran befestigten Neutronenabsorberstäben (3) in der Aufnahmevorrichtung (9) positioniert und mit den neuen Neutronenabsorberstäben (3) verbunden wird.

2. Einrichtung zur Durchführung des Verfahrens nach Anspruch 1, dadurch gekennzeichnet, daß die Aufnahmevorrichtung (9) eine Auflage (26) zum Abstützen des Trägers (2) und Durchführungen (16) für jeden mit dem Träger verbundenen Neutronenabsorberstab (3) aufweist, daß der Köcher (20) unterhalb einer Durchführung (16) angeordnet ist, daß jede Durchführung als Klemmelement für einen Neutronenabsorberstab (3) ausgebildet ist und daß Werkzeuge (53) zum Lösen, Befestigen und Handhaben der Neutronenabsorberstäbe (3) vorgesehen sind.

3. Einrichtung nach Anspruch 2, dadurch gekennzeichnet, daß die Durchführung (16) an ihrer dem Köcher (20) zugewandten Seite als abgesetzte Bohrung (17) ausgebildet ist, daß von der Schulter (18) der abgesetzten Bohrung bis zur Auflage (26) für den Träger (2) die Durchführung als kegelige Bohrung (19) auseinanderläuft, daß der Köcher (20) unter Zwischenschaltung eines Ringes (22) in der abgesetzten Bohrung befestigt ist, daß der Ring (22) ein Tellerfederpaket (23) trägt, das unter Zwischenlage einer ringförmigen Scheibe (24) an der Schulter (18) zum Anliegen kommt und daß von dem Träger belastbare kegelförmig ausgebildete Klemmstücke (25) entlang der kegeligen Bohrung (19) bewegbar sind.

4. Einrichtung nach Anspruch 5, dadurch gekennzeichnet, daß dem Träger (2) ein gegenüber der Aufnahmevorrichtung (9) festlegbarer Klemmkörper (14) zugeordnet ist, der ein Kupplungsstück des Trägers beaufschlagt und mit Durchgangsbohrungen (36) für Werkzeuge (53) versehen ist.

5. Einrichtung nach Anspruch 2, dadurch gekennzeichnet, daß die Durchführungen Langlöcher (41) sind, die in übereinander angeordneten und in Längserstreckung der Langlöcher relativ zueinander bewegbaren Platten (38, 38a) eingebracht sind.

6. Einrichtung nach Anspruch 5, dadurch gekennzeichnet, daß die Platten (38, 38a) in einem Rahmen (39) geführt sind und daß zur Relativbewegung der Platten ein Drehantrieb (43) vorgesehen ist, dessen Drehbewegung in linienförmige Bewegung umgesetzt wird.

7. Einrichtung nach einem der Ansprüche 2-6, dadurch gekennzeichnet, daß die Aufnahmevorrichtung (9) auf dem Brennelementbehälter (10) einer im Lagerbecken für Brennelemente angeordneten Brennelementreparaturstation abgestützt ist.

8. Einrichtung nach einem derAansprüche 2-5, dadurch gekennzeichnet, daß am Boden des Köchers (20) eine in den Innenraum desselben ragende Druckfeder (21) angeordnet ist.

**Claims**

1. Method for replacing neutron absorber rods which are held at their top end in one hole each of a carrier and can be moved in guide thimbles of a nuclear reactor fuel assembly, in which method

a.) the carrier (2) with the neutron absorber rods (3) is inserted and secured in a receiving device (9) retained at a fixed point of the fuel assembly store,

b.) the connection between the carrier (2) and at least one neutron absorber rod (3) to be replaced is released,

c.) the carrier (2) with the neutron absorber rods (3) possibly still attached thereto is withdrawn from the receiving device (9),

d.) the released neutron absorber rods which remain behind in tubes (20) of the receiving device are withdrawn for storage,

e.) new neutron absorber rods are inserted in the tube positions which have become free,

f.) and the carrier (2) with the neutron absorber rods (3) possibly still attached thereto is positioned in the receiving device (9) and connected to the new neutron absorber rods (3).

2. Device for performing the method according to claim 1, characterized in that the receiving device (9) has a rest (26) for supporting the carrier (2) and apertures (16) for each neutron absorber rod (3) connected to the carrier, in that the tube (20) is disposed below an aperture (16), in that each aperture is constructed as a clamping member for a neutron absorber rod (3) and in that tools (53) are provided for releasing, attaching and handling the neutron absorber rods (3).

3. Device according to claim 2, characterized in that the aperture (16) is constructed as a shouldered hole (17) on the side thereof which faces the tube (20), in that the aperture diverges as a tapered hole (19) from the shoulder (18) of the shouldered hole to the rest (26) for the carrier (2), in that the tube (20) is secured in the shouldered hole with the intercalation of a ring (22), in that the ring (22) supports a cup spring assembly (23) which comes to rest against the shoulder (18) with the intercalation of an annular disc (24), and in that conically constructed clamping pieces (25) capable of bearing the carrier can be moved along the conical hole (19).

4. Device according to claim 3, characterized in that a clamping body (14), which can be fixed with respect to the receiving device (9), is allotted to the carrier (2) and bears upon a coupling piece of the carrier and is provided with through-holes (36) for tools (53).

5. Device according to claim 2, characterized in that the apertures are elongated holes (41) which are made in plates (38, 38a) which are disposed above each other and can be moved relative to each other in the longitudinal extension of the elongated holes.

6. Device according to claim 5, characterized in that the plates (38, 38a) are guided in a frame (39) and in that a rotary drive (43) is provided whose rotary movement is converted into linear movement.

7. Device according to one of the claims 2-6, characterized in that the receiving device (9) is supported on the fuel assembly holder (10) of a fuel assembly repair station disposed in the fuel assembly cooling pond.

8. Device according to one of the claims 2-5, characterized in that there is disposed on the base of the tube (20) a compression spring (21) projecting into the interior space of the latter.

**Revendications**

1. Procédé pour le remplacement de crayons absorbant les neutrons qui sont respectivement maintenus à leur extrémité supérieure dans un alésage d'un support et peuvent être déplacés · dans des tubes-guides d'un assemblage combustible d'un réacteur nucléaire, dans lequel:

a) on installe et on fixe le support (2) avec les crayons absorbants (3) dans un dispositif récepteur (9) arrêté en un point fixe du magasin pour assemblages combustibles,

b) on supprime le raccordement entre le support (2) et au moins un crayon absorbant (3) à remplacer,

c) on enlève du dispositif récepteur (9) le support (2) avec les crayons absorbants (3) éventuellement encore fixés dessus,

d) on enlève pour les stocker les crayons absorbants détachés restant dans des carquois (20) du dispositif récepteur,

e) on introduit de nouveaux crayons absorbants dans les carquois libérés,

f) et on positionne le support (2) avec les crayons absorbants (3) éventuellement encore fixés dessus dans le dispositif de récepteur (9) et on le raccorde aux nouveaux crayons absorbants (3).

2. Dispositif pour la mise en oeuvre du procédé selon la revendication 1, caractérisé par le fait que le dispositif récepteur (9) comprend une surface d'appui (26) soutenant le support (2) et des traversées (16) pour chaque crayon absorbant (3) raccordé au support, que le carquois (20) est placé en dessous d'une traversée (16), que chaque traversée est réalisée sous la forme d'un élément de serrage pour un crayon absorbant (3) et qu'il est prévu des outils (53) pour défaire, fixer et manipuler les crayons absorbants (3).

3. Dispositif selon la revendication 2, caractérisé par le fait que la traversée (16) est réalisée sous la forme d'un perçage étagé (17) sur son côté tourné vers le carquois (20) que la traversée s'évase en forme de perçage conique (19) à partir de l'épaulement (18) du perçage étagé jusqu'à la surface d'appui (26) pour le support (2), que le carquois (20) est fixé dans le perçage étagé avec intercalation d'un anneau (22), que l'anneau (22) porte un paquet de rondelles Belleville (23) qui vient s'appliquer sur l'épaulement (18) avec interposition d'une rondelle annulaire (24) et que des pièces de serrage (25) réalisées en forme de cônes et soumises à la charge du support, peuvent se déplacer le long du perçage conique (19).

4. Dispositif selon la revendication 3, caractérisé par le fait qu'au support (2) est associé un corps de serrage (14) qui peut être fixé par rapport au dispositif récepteur (9), qui agit sur une pièce d'accouplement du support et qui est muni de perçages (36) pour le passage d'outils (53).

5. Dispositif selon la revendication 2, caractérisé par le fait que les traversées sont des trous oblongs (41) qui sont pratiqués dans des plaques (38, 38a) superposés et déplaçables les unes par rapport à l'autre dans le sens longitudinal des trous oblongs.

6. Dispositif selon la revendication 5, caractérisé par le fait que les plaques (38, 38a) sont guidées dans un cadre (39) et que, pour le déplacement relatif des plaques, il est prévu un système d'entraînement rotatif (43) dont le mouvement rotatif est transformé en mouvement linéaire.

7. Dispositif selon l'une des revendications 2-6, caractérisé par le fait que le dispositif récepteur (9) prend appui sur le réservoir (10) d'un poste de réparation d'assemblages combustibles disposé dans la piscine de stockage des assemblages combustibles.

8. Dispositif selon l'une des revendications 2-5, caractérisé par le fait que sur le fond du carquois (20) est disposé un ressort de compression (21) faisant saillie à l'intérieur de celui-ci.

Fig.1

Fig.3

Fig.2

Fig.4

Fig.5